# EUROPEAN PATENT SPECIFICATION

(11) **EP 2 766 888 B1**
(45) Date of publication and mention of the grant of the patent: **22.08.2018**
(21) Application number: 12839270.1
(22) Date of filing: 10.10.2012
(51) Int. Cl.: G06K 19/077, G09F 3/20, H04B 1/59

(54) **TRANSFERRING OF INFORMATION IN ELECTRONIC PRICE LABEL SYSTEMS**
ÜBERTRAGUNG VON INFORMATIONEN IN ELEKTRONISCHEN PREISSCHILDSYSTEMEN
TRANSFERT D'INFORMATIONS DANS DES SYSTÈMES D'ÉTIQUETTES DE PRIX ÉLECTRONIQUES

(30) Priority: 13.10.2011 FI 20116014
(43) Date of publication of application: 20.08.2014
(73) Proprietor: MariElla Labels Oy, 01450 Vantaa (FI)
(72) Inventor: KARHUKETO, Hannu, FI-04500 Tuusula (FI); KIVINEN, Jarmo, FI-00520 Helsinki (FI)
(74) Representative: Heinänen Oy Patent Agency
(86) International application number: PCT/FI2012/050974
(87) International publication number: WO 2013/053999

(56) References cited:
- FI-A- 20 105 357
- FI-A- 20 105 357
- US-A1- 2004 178 912
- US-A1- 2009 109 001
- US-A1- 2009 289 771
- US-B1- 6 650 230
- US-B1- 7 436 285

## Description

### Technical field

The invention relates to electronic price label systems comprising at least one base station and plurality of electronic labels. The invention relates especially to transferring of information between base stations and electronic labels.

### Background of the invention

Conventionally, the price information on price tags in shops is always changed manually when the price of the product is changed. The new prices are printed out on paper or a corresponding material, and these tags with their new price markings are placed manually in a location reserved for the price tags on shelves in the sales premises. Thus, an employee must first find the correct location of the price tag to be updated, after which the previous price tag is removed and discarded and the new price tag is inserted in its position. A disadvantage in this arrangement is, among other things, the fact that the arrangement is very laborious and there is a high risk of mistakes. In case of a mistake, a situation may, for example, occur, in which the price information on the price tags on the shelves conflicts with the price information in the cash register system.

To avoid the above-mentioned drawbacks, electronic systems have been developed, in which electronic price labels and their electronic displays are provided on the front edge or above the shelves, close to the products, in which the price information of the products can be changed in a centralized manner from the control centre of the system, or the like. This will facilitate and accelerate the updating of the price information to a significant extent. The data on the displays can be updated in a cabled or wireless manner, depending on the system. Cabled systems involve the problem that a wire connection must be provided for each display for data transmission and possibly also for power supply. For example in a normal retail outlets for daily consumer goods, the number of displays is relatively large; consequently, there must also be a large number of wires, which causes problems and limitations, for example, on the placement of the price displays.

Wireless systems do not require complex wirings but, in turn, they require transponders equipped with antennas in connection with battery-driven price displays, for communicating with the control unit of the system via suitable communication means.

When the aim is to minimize the power consumption of the electronic price labels and thereby to extend the service life of their batteries, one method in the communication between the communication means and the electronic price labels is such in which the transducer placed in the electronic price labels does not, by itself, implement active radio transmission so that the transmission power would be supplied from a separate power supply of the electronic price label, but the electronic price label only reflects the radio transmission of the communication means at a given moment of time and in a given way. The electronic price label can change the reflectance of its own antenna, wherein the electronic price label is capable of acknowledging or responding to messages of the communication means by simple reply messages. In the following, such a communication method will be described on a general level.

The communication means communicate with the electronic price labels by transmitting signals which are listened to by all the electronic price labels and from which a single electronic price label identifies a command relating to itself on the basis of a given electronic price label specific identification. After receiving a command relating to itself, the single electronic price label responds to the communication means by reflecting the transmission of the communication means itself back to the communication means, changed by a phase shift caused by a given time delay and at a given moment of time. Typically, after transmitting a command intended for a given price display, the communication means starts to transmit, for example, a carrier wave of a given type for a given period of time, the carrier wave being reflected back, with a given phase shift, by the price display that recognized the command. Consequently, the communication means is capable of identifying the reflected response as belonging to a given price display, because it knows to expect it within a given period of time after sending a unique command to said display. From its own transmission, the communication means can separate the reflected response that is significantly weaker in power, on the basis of the phase shift produced by the display device.

Because these reflected response signals are typically very weak and they can be disturbed and suppressed by other ambient reflections or signals, there is a need to improve the quality of the received signal by all possible means.

One prior art publication relating to the same field of electronic labels is FI20105357 which describes a method and system for an electronic price label system comprising at least a base station and a plurality of electronic labels for transferring information between the base station and electronic labels. The method of FI20105357 comprises transmitting a first message from a base station to a plurality of electronic labels, the first message comprising at least identification information of one electronic label, receiving the first message at the electronic label, recognizing the identification information in the first transmitted message by the electronic label, transmitting a second message from the base station to the electronic label, receiving the second message and sending an acknowledgement message to the second message from electronic label with a modulation frequency from a certain frequency range, and searching the acknowledgement message from a predefined frequency range at the base station.

### Summary of the invention

It is an aim of the present invention to reduce the above-mentioned problems and simultaneously to provide a low-cost, simple and reliable arrangement for improving the performance of communications at radio frequencies between base stations and electronic price labels. The invention is characterized in what will be presented in the characterizing part of independent claims. Other embodiments of the invention are characterized in what will be presented in the other claims.

The solution of the invention is to use two different frequency bands in transmission of information from base stations to electronic labels and from electronic labels to base stations. First frequency band is used to send a first message from base station to electronic label or labels. After the first message has been sent, a second message is sent to electronic label using a second frequency band. The electronic label can send a third message, e.g. an acknowledgement or response, to the base station using the second frequency band.

In one embodiment of the invention the first frequency band is a higher band than the second frequency band. This brings many benefits. There is much wider bandwidth available usually on higher bands and this is needed for the system because messages from base stations to electronic labels need more bandwidth than messages from electronic labels to base stations. By using higher frequency band in messages from the base station to electronic labels the need for higher bandwidth can be met. On the other hand another limitation of the prior art solutions is the limited range of the electronic labels. By using lower frequency band for messages from electronic labels to base stations extends the range of the electronic label because path loss is lower on lower frequencies. This creates benefits in reception of the messages sent by the electronic label at the base station. The base station can use high output power to send messages or broadcast and therefore using higher frequency band at the base station's transmissions doesn't create coverage problems in the system. Because the electronic label is battery powered, it can't use very high power in transmissions. When electronic label uses lower frequency band the coverage of the electronic label can be improved even when it's using low power in transmissions when comparing to the case when the electronic label would use higher frequency band for its transmissions.

Another benefit of the present invention is that also the amount interference is reduced between the messages from electronic labels to base stations and from base stations to electronic labels because they are sent using different frequency bands.

In one embodiment of the invention the first frequency band is lower frequency band than the second frequency band. In this embodiment the advantages of the present invention are e.g. better reception of the messages from electronic labels to base stations if the second frequency band has less interference or fading than the first frequency band. In these cases higher band should be used for messages from electronic labels to base station.

One further advantage of the invention is that because the reception quality of base stations and electronic labels is improved. This way the number of base stations can be kept minimum and at the same time costs and complexity of the system are also kept low.

When compared to prior art solutions, also the installation remains simple as the complexity of the system is low, number of the base stations is low and there are no complex antenna diversity arrangements to be installed. It's possible to use antenna diversity or other diversity techniques in combination with the solution of the present invention to further increase the gain.

### Brief description of the drawings

In the following, the invention will be described in more detail by means of an embodiment example with reference to the appended drawings, in which
Fig. 1 presents an example embodiment of an electronic price label system according to the present invention,
Fig. 2 presents an example embodiment of the electronic price label according to the present invention,
Fig. 3 presents a side view of an example embodiment of the electronic price label according to the present invention,
Fig. 4 presents an exemplary message sequence chart for communication between electronic label and the base station,
Fig. 5 presents an exemplary method according to the present invention for transferring information simultaneously on two base stations
Fig. 6 presents an exemplary hardware implementation according to the present invention, and
Fig. 7 presents another exemplary hardware implementation according to the present invention.

### Detailed description of the invention

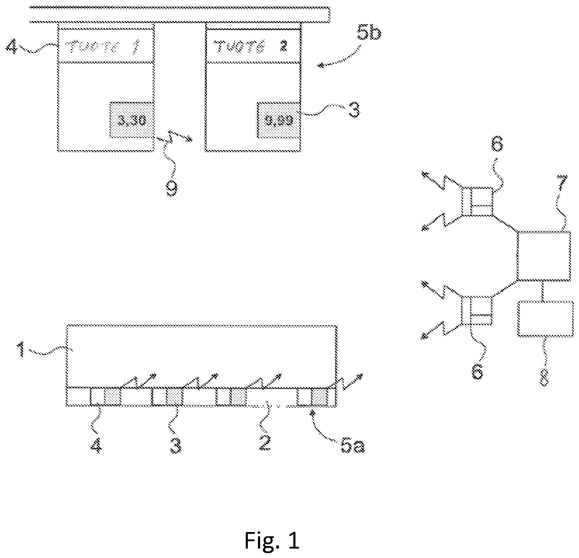

Figure 1 shows a schematic and simplified view of an arrangement according to the invention in a supermarket or in corresponding sales premises. Product shelves 1 are equipped with shelf rails 2, on which electronic price labels 5a equipped with, for example, electrophoretic laminate displays 3 and product information 4 are placed in locations corresponding to products. The laminate display 3 is arranged to display the price of the product, and the product information 4 contains, among other things, the name of the product and possibly some other information relating to the product. In a corresponding manner, there are, in required locations in the sales premises, hanging electronic price labels 5b forming a display pocket, which also comprise both an electrophoretic laminate display 3 and product information 4. Each electronic laminate display 3, or shortly display 3, constitutes a thin price tag equipped with display segments and resembling a paper price tag, in which the required product prices and other necessary symbols are formed by changing the colour of the substantially two-coloured display segments. One layer of the display is, for example, an active ink layer. The ink layer contains a number of microcapsules filled with liquid and containing, for example, substantially black particles with a positive surface charge and substantially white particles with a negative surface charge, whose location in the microcapsules is controlled by an electric field so that at the desired display segments, the black particles are on top, wherein said display segments look black when viewed from above, and at the other display segments, the white particles are on top, wherein these display segments look white when viewed from above. The background of the display consists of the same microcapsules, wherein, for example, the price information can be displayed as dark numbers against a light background, or vice versa, if desired. Such a display used can be, for example, the electrophoretic microcapsule display laminate disclosed in Finnish patent application No. FI 20050192.

Furthermore, the system comprises at least a base station 7 equipped with communication means 6, such as a radio transmitter, via which it is possible to transmit, for example, updated price information and other control information to the electronic price label 5a, 5b. Furthermore, the system may comprise scanners 8 located at cash registers and connected to the cash register system, for scanning the price, wherein the cash register system and the electronic price labels always have the same up-to-date information on the prices of the products. Furthermore, the base station 7 may be coupled to other controlling and supporting systems. The wireless connection between the base station 7 and the electronic price labels 5a, 5b is illustrated with arrows 9.

The application of the invention is not limited solely to price displays that employ display technology of the above-described kind, but it is obvious that the price displays can, as such, be implemented by applying any known technology. The invention is expressly related to improving wireless radio communications by using two frequency bands for transferring information. Furthermore, the invention is not limited solely to improving performance of radio communications by using two bands for transferring the information in electronic labels systems, but the invention can also be applied in radio communications between other electronic devices. Consequently, the examples presented herein and focusing on price displays must be considered as examples but not the sole embodiments of the invention.

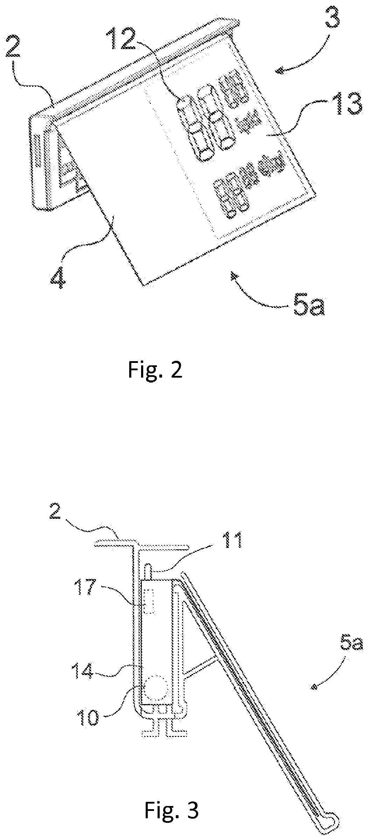

Figures 2 and 3 show, in more detail, one example of the type of the electronic price label 5a attached to a shelf rail 2. A display driver 14 connected to the display 3, and a receiver 11 equipped with an antenna, as well as a power source 10, which is, for example, a conventional battery, are fixed to the back of the electronic price label 5a. The power source 10 is arranged to supply electric energy to the electronic price label 5a and its display driver 14. Price information or other information shown on the display 3 by means of the receiver 11 and the display driver 14 can be updated in a wireless manner from the base station 7. In this embodiment example, the updating and control data is transmitted by means of radio waves, but also other ways of data transmission are feasible. Each display laminate 3 constitutes a thin price tag equipped with display segments 12 and resembling a paper price tag, on which the required product prices and other necessary symbols are formed by changing the colour of substantially two-coloured display segments 12. The colour of the display segments 12 as well as of the background 13 is changed by means of an electric field formed by electric current, as described above.

In the arrangement according to the example, the electronic price labels 5a, 5b comprise mode changing means 17 for changing the mode of the antenna of the receiver 11 between at least two different modes, whereby, for example in the first mode, the reflectance of the antenna is good and, in the second mode, the reflectance is poor. In a corresponding manner, the antenna modes can be adjusted by the mode changing means 17 so that the antenna reflects radio waves in different phases in the different modes. Consequently, the electronic price label 5a, 5b is fitted to vary the mode of the antenna of its receiver 11 to produce a reflection encoded in a given way and having a time delay varying according to the antenna mode. The communication means 6 interpret the different time delays as encoded data signals transmitted by the electronic price label 5a, 5b, on the basis of which, for example, the communication means 6 identify each electronic price label. The above-mentioned encoding implies, in its simplest form, that the electronic price label 5a, 5b reflects back the carrier wave transmitted by the communication means 6, which may have a frequency of, for example, 868 MHz so that the electronic price label 5a, 5b grounds the antenna of the receiver 11 by means of the mode changing means 17 at the frequency of, for example, 150 kHz, thereby producing a kind of square wave from the reflected signal. The electronic price label 5a, 5b thus affects the reflected signal by changing the mode of the antenna 11. In this reflection, the phase shift of the signal would be preferably 180 degrees, at which the detection of a low-powered reflection by the communication means 6 is at its best.

The present invention improves this radio communication, which happens between the electronic labels and base station(s) by using two different frequency bands in transmission of information from base stations to electronic labels and from electronic labels to base stations. In the solution of the invention one frequency band is used for messages from base stations 7 to electronic labels 5a, 5b, e.g. for first message, and one frequency band for messages from electronic labels 5a, 5b to base station, e.g. for second and third message. Also second message uses a second frequency band because it's later or simultaneously used by electronic label for sending a response to the base station by reflecting back, i.e. backscattering, the second message.

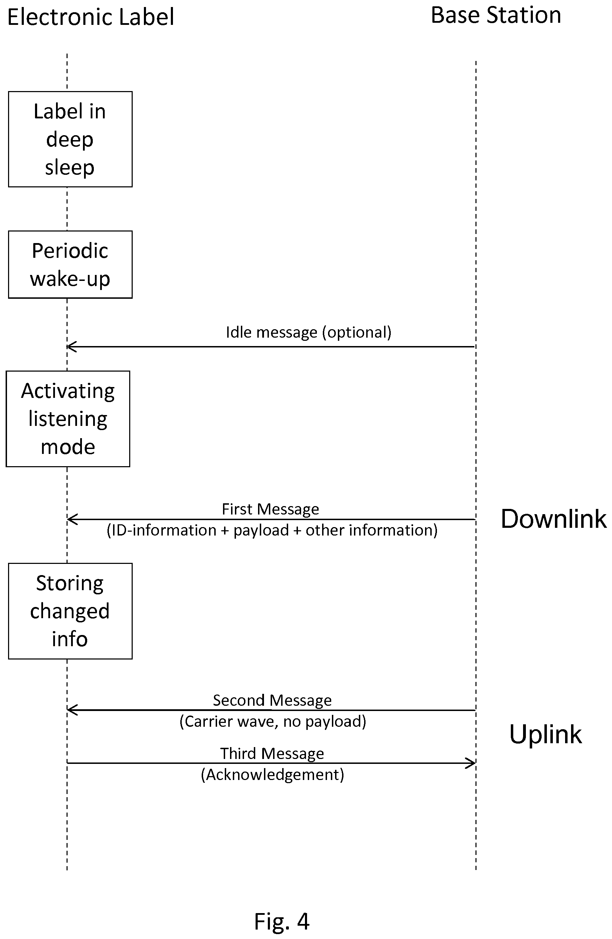

Figure 4 presents an example message sequence chart of communication between a base station 7 and an electronic label 5a, 5b. The electronic labels 5a, 5b are in deep sleep mode during most of the time. In the deep sleep mode the battery consumption is much lower than in the active operation. The electronic labels 5a, 5b wake up from deep periodically to listen if there is broadcast of the base station 7. The base station 7 can send optional idle messages to wake up the electronic labels 5a, 5b. If idle messages are used, the electronic label 5a, 5b activates the listening mode when it receives the idle-message. The idle messages can be for example broadcast messages that contain no payload and no specific identification information of any electronic label 5a, 5b.

When the electronic labels 5a, 5b are in listening mode the base station 7 sends a first message containing identification information of the electronic label 5a, 5b the base station 7 wants to send a message to. The first message is sent using a first frequency band. The message may contain payload or other information, e.g. new price information to be displayed in the display of the electronic label 5a, 5b. The electronic label 5a, 5b that is wanted to be contacted receives the message and recognizes its own identification information. After receiving the first message comprising e.g. new price information to be displayed the electronic label 5a, 5b stores the information.

To make sure that the electronic label 5a, 5b received the first message an acknowledgement message is needed from the electronic label. Therefore after transmitting the first message intended for a given price display, the base station 7 starts to transmit a second message, for example, a carrier wave of a given type for a given period of time, the carrier wave being reflected back as an acknowledgement, with a given phase shift, by the electronic label 5a, 5b that recognized the command. The second message is sent using a second band. In one embodiment of the invention the second message contains only carrier wave.

The electronic label 5a, 5b can answer the message by sending e.g. a third message as described below on the second frequency band. The electronic label 5a, 5b reflects back the carrier wave transmitted by the base station 7, which may have a frequency of, for example, 685 MHz so that the electronic label 5a, 5b grounds the antenna of the receiver 11 by means of the mode changing means 17 at the frequency of, for example, 150 kHz, thereby producing a kind of square wave from the reflected signal. The electronic label 5a, 5b thus affects the reflected signal by changing the mode of the antenna. In this reflection, the phase shift of the signal would be preferably 180 degrees, at which the detection of a low-powered reflection by the base station 7 is at its best. Sending the acknowledgement can also take place simultaneously to the sending of the second message.

In one embodiment of the invention the first frequency band is higher than the second frequency band. The first frequency band can be for example 2,4 GHz ISM band and the second frequency band can be for example 868 MHz ISM band. In another embodiment of the invention the first frequency band can be for example 869,5 MHz ISM band and the second frequency band can be for example 868 MHz ISM band.

Using two frequency bands according to the present invention brings many benefits. There is much wider bandwidth available usually on higher bands and this is needed for the system because messages from base stations 7 to electronic labels 5a, 5b need more bandwidth than messages from electronic labels 5a, 5b to base stations 7. By using higher frequency band in messages from the base station 7 to electronic labels 5a, 5b the need for higher bandwidth can be met. On the other hand range of the communication is limited by the signal of the electronic label 5a, 5b (uplink signal) and therefore using lower frequency band for messages from electronic labels 5a, 5b to base stations 7 is able to extend the range of the electronic label 5a, 5b because path loss is lower on lower frequencies. Also path loss of the uplink signal is twice the path loss of the downlink signal because the uplink signal is a reflection of the original signal. For transmissions from base station 7 to electronic labels 5a, 5b higher path loss of higher frequency band is not a problem because base stations 7 can use high power in transmitting the messages.

In one embodiment of the invention the first frequency band is lower band than the second frequency band. In this embodiment the advantages of the present invention are e.g. that it enables better reception of the messages from electronic labels to base stations if the second frequency band has less interference or fading than the first frequency band. In these cases higher band should be used for messages from electronic labels to base station.

In one embodiment of the invention the frequencies of the first and second frequency band can be changed during operation of the system with each other. This means that if first frequency band was originally higher frequency band than the second frequency band, it can be changed so that first frequency band uses lower frequency band than the second frequency band. This change can be done e.g. based on signal quality measurements, signal level measurement or interference measurements. One criterion that can be used for selecting used frequency bands for first frequency band and second frequency band can be for example that frequencies which offer better conditions for transmitting signals are used for messages from electronic labels to base stations. The frequencies used by first and second frequency bands can also be changed with each other e.g. if there is fading or interference with messages from electronic labels to base station or vice versa. The change can be done once, when the signal quality requires, periodically or with some different criteria.

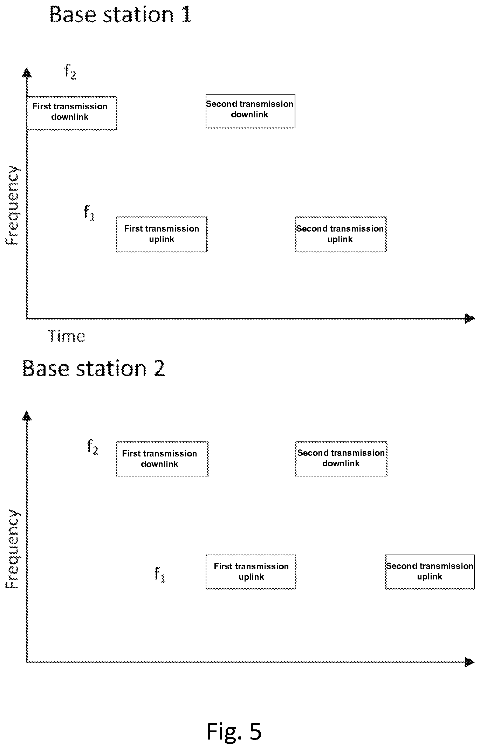

By using two different frequency ranges that are placed apart from each reduces also the interference between the two different frequency bands and transmissions from base stations 7 to electronic labels 5a, 5b (downlink) don't interfere with transmissions from electronic labels 5a, 5b to base station 7 (uplink). With the solution of present invention two base stations 7 can operate simultaneously when they are synchronized so that uplink and downlink are overlapping. This embodiment is presented in figure 5. In figure 5 the first base station sends a first transmission from first base station to electronic label(s) (downlink) on a frequency f2 from the first frequency band. After that the electronic label sends a first transmission to the first base station (uplink) on a frequency f1 from the second frequency band and at the same time the second base station can send a first transmission in downlink on the frequency f2 without interference to the uplink transmission of the electronic label on frequency f1. The first base station can then send another transmission in downlink on frequency f2 and at the same time electronic label can send a first transmission uplink to the second base station on frequency f1 without interference to the transmission of the first base station. The two or more base stations and electronic labels can continue communication in this synchronized manner without interfering each other's transmissions. The uplink messages from the electronic labels to base stations can require a transmission from base station according to figure 4 (second and third message) e.g. if backscattering is used.

Using the solution of the present invention requires improvements hardware when comparing with the prior art solutions. For example to enable using of two frequency bands in transmission in one embodiment of the invention the electronic label can have wideband RF-circuit and an antenna that has radiating resonances at two frequencies. The base station according to one embodiment of the present invention can have dual band synthesizer which has separate outputs for the two bands, that can be used separately and/or simultaneously. The transmitter of the base station can have one or two RF chains. When there are two RF-chains they are combined with a duplexer or a switch. The receiver of the base station can be configured to duplex or switch the received signal to two chains. The antenna on the base station can be a dual frequency antenna that radiates at both used frequency bands.

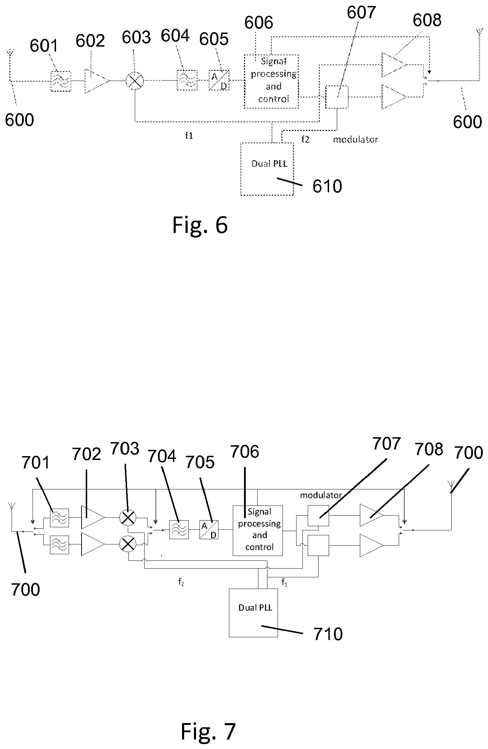

In figure 6 a more detailed exemplary hardware implementation of the base station is presented. The base station comprises an antenna 600 for sending and receiving RF signals on two bands, a bandpass filter 601, a low noise amplifier 602, a mixer 603 for converting the received signal to a suitable frequency for A/D converter, an antialiasing filter 604 for A/D converter, an A/D (analog to digital) converter 605, a signal processing and control module 606 for digital signal, the module 606 can be realized by e.g. FPGA (field programmable gate array), a modulator 607 for modulating the downlink carrier frequency, a power amplifier 608 and a dual PLL frequency synthesizer 610 for generating the needed carrier frequencies.

Figure 7 present a more detailed exemplary hardware implementation of the base station e.g. for the embodiment of figure 5. The base station comprises an antenna 700 for sending and receiving RF signals on two bands, a bandpass filter 701, a low noise amplifier 702, a mixer 703 for converting the received signal to a suitable frequency for A/D converter, an antialiasing filter 704 for A/D converter, an A/D (analog to digital) converter 705, a signal processing and control module 706 for digital signal, the module 706 can be realized by e.g. FPGA (field programmable gate array), a modulator 707 for modulating the downlink carrier frequency, a power amplifier 708 and a dual PLL frequency synthesizer 710 for generating the needed carrier frequencies.

The invention relates thus to a method for transferring information in an electronic price label system, the electronic price label system comprising at least one base station 7 and a plurality of electronic labels 5a, 5b for transferring information between the base station 7 and electronic labels 5a, 5b wherein the base stations 7 and the electronic labels 5a, 5b comprise at least communication means. The method comprises: sending first message from base station 7 to electronic label 5a, 5b using a first frequency band, after sending the first message, sending a second message from base station 7 to electronic label 5a, 5b using second frequency band, and sending a third message from electronic label 5a, 5b to base station 7 using a second frequency band.

In one embodiment of the invention the third message is an acknowledgement message to the first message.

In one embodiment of the invention the third message is sent from electronic label to base station by reflecting back the second message to base station.

In one embodiment of the invention the first frequency band is higher frequency band than the second frequency band.

In one embodiment of the invention the first frequency band is 2.4 GHz ISM-band and the second frequency band is 868 MHz ISM-band.

In one embodiment of the invention information to be transferred comprises price information to be displayed by the electronic price label 5a, 5b or control information for the electronic price label 5a, 5b.

The invention relates also to an electronic price label of an electronic price label system, the electronic price label system comprising at least one base station 7 and a plurality of electronic labels 5a, 5b. The electronic label 5a, 5b comprises at least communication means. The electronic label 5a, 5b is configured to receive a first message on a first frequency band, after receiving the first message, to receive a second message on a second frequency band and to send a third message on a second frequency band.

In one embodiment of the invention the electronic price label further comprises an electrophoretic laminate display 3.

In one embodiment of the invention communication means comprise transmitter and receiver.

In one embodiment of the invention the electronic price label 5a, 5b is configured to send by reflecting back a received message.
The invention relates also to a base station of an electronic price label system, the electronic price label system comprising at least one base station 7 and a plurality of electronic labels 5a, 5b. The base station 7 comprises at least communication means. The base station 7 is configured to send a first message on a first frequency band and after sending the first message to send a second message at a second frequency band and to receive a third message on the second frequency band.
In one embodiment of the invention communication means comprise transmitter and receiver.
In one embodiment of the invention the third message is an acknowledgement message to the first message from electronic label 5a, 5b to base station 7.
The invention relates also to an electronic price label system, comprising at least one base station 7 and a plurality of electronic labels 5a, 5b wherein the base stations 7 and the electronic labels 5a, 5b comprise at least communication means and information is transferred between the base stations 7 and electronic labels 5a, 5b. The base station 7 or the base stations are configured to send a first message at a first frequency band and after sending the first message to send second message at a second frequency band and to receive a third message on the second frequency band. The electronic labels 5a, 5b are configured to receive first message at the first frequency band and after receiving the first message to receive a second message at the second frequency band and to send a third message at the second frequency band.

## Claims

1. Method for transferring information in an electronic price label system, the electronic price label system comprising at least two base stations (7) and a plurality of electronic labels (5a, 5b), wherein base stations (7) and electronic labels (5a, 5b) comprise at least communication means and information is transferred between base stations (7) and electronic labels (5a, 5b) **characterized in that** the method comprises:
sending first message from a first base station (7) to an electronic label (5a, 5b) using a first frequency band,
after sending the first message, sending a second message from the said first base station (7) to the said electronic label (5a, 5b) using second frequency band and at the same time sending first message from a second base station (7) to an electronic label (5a, 5b) using a first frequency band, and
sending a third message from the said electronic label (5a, 5b) to the said first base station (7) using a second frequency band by reflecting back the received second message from the said first base station, and
after this sending a second message from the said second base station (7) to the said electronic label (5a, 5b) by using second frequency band and sending a third message from the said electronic label (5a, 5b) to the said second base station (7) using a second frequency band by reflecting back the received second message from the said second base station,
wherein the first frequency band and the second frequency band are different frequency bands.

2. Method of claim 1, **characterized in that** the third message is an acknowledgement message to the first message.

3. Method of any of claims 1 or 2, **characterized in that** the first frequency band is higher frequency band than the second frequency band.

4. Method of any of claim 3, **characterized in that** the first frequency band is 2.4 GHz ISM-band and the second frequency band is 868 MHz ISM-band.

5. Method of any of claims 1 - 4, **characterized in that** information to be transferred comprises price information to be displayed by the electronic price label (5a, 5b) or control information for the electronic price label (5a, 5b).

6. Electronic price label system, comprising at least two base stations (7) and a plurality of electronic labels (5a, 5b) wherein the base stations (7) and the electronic labels (5a, 5b) comprise at least communication means and information is transferred between the base stations (7) and electronic labels (5a, 5b) **characterized in that**,
the first base station (7) is configured to send a first message at a first frequency band simultaneously with the second base station sending on a second frequency band and after sending the first message to send second message at a second frequency band simultaneously with the second base station sending on the first frequency band and to receive a third message on the second frequency band sent by the electronic label by reflecting back the second message sent by the first base station, and
the second base station (7) is configured to send a first message on a first frequency band to an electronic label (5a, 5b) simultaneously with the first base station sending on a second frequency band and after sending the first message to send a second message at the second frequency band to the said electronic label (5a, 5b) simultaneously with the first base station sending on the first frequency band and to receive a third message on the second frequency band from the said electronic label (5a, 5b) sent by the electronic label by reflecting back the second message sent by the second base station,
wherein the first frequency band and the second frequency band are different frequency bands.

## Patentansprüche

1. Verfahren zur Übertragung von Informationen in einem elektronischen Preisschildsystem, wobei das elektronische Preisschildsystem wenigstens zwei Basisstationen (7) und mehrere elektronische Preisschilder (5a, 5b) aufweist, wobei die Basisstationen (7) und die elektronischen Preisschilder (5a, 5b) wenigstens Kommunikationsmittel aufweisen und Informationen zwischen den Basisstationen (7) und den elektronischen Preisschildern (5a, 5b) übertragen werden, **dadurch gekennzeichnet, dass** das Verfahren aufweist:
Senden einer ersten Meldung von einer ersten Basisstation (7) zu einem elektronischen Preisschild (5a, 5b) unter Verwendung eines ersten Frequenzbandes,
nach dem Senden der ersten Meldung, Senden einer zweiten Meldung von der ersten Basisstation (7) zu dem elektronischen Preisschild (5a, 5b) unter Verwendung eines zweiten Frequenzbandes und gleichzeitiges Senden einer ersten Meldung von einer zweiten Basisstation (7) zu einem elektronischen Preisschild (5a, 5b) unter Verwendung eines ersten Frequenzbandes, und
Senden einer dritten Meldung von dem ersten elektronischen Preisschild (5a, 5b) zu der ersten Basisstation (7) unter Verwendung eines zweiten Frequenzbandes durch Zurückspiegeln der empfangenen zweiten Meldung von der ersten Basisstation, und
danach Senden einer zweiten Meldung von der zweiten Basisstation (7) zu dem elektronischen Preisschild (5a, 5b) unter Verwendung eines zweiten Frequenzbandes und Senden einer dritten Meldung von dem elektronischen Preisschild (5a, 5b) zu der zweiten Basisstation (7) unter Verwendung eines zweiten Frequenzbandes durch Zurückspiegeln der empfangenen zweiten Meldung von der zweiten Basisstation,
wobei das erste Frequenzband und das zweite Frequenzband unterschiedliche Frequenzbänder sind.

2. Verfahren nach Anspruch 1, **dadurch gekennzeichnet, dass** die dritte Meldung eine Bestätigungsmeldung zu der ersten Meldung ist.

3. Verfahren nach einem beliebigen der Ansprüche 1 oder 2, **dadurch gekennzeichnet, dass** das erste Frequenzband ein höheres Frequenzband als das zweite Frequenzband ist.

4. Verfahren nach einem beliebigen von Anspruch 3, **dadurch gekennzeichnet, dass** das erste Frequenzband ein 2,4 GHz-ISM-Band ist und das zweite Frequenzband ein 868 MHz-ISM-Band ist.

5. Verfahren nach einem beliebigen der Ansprüche 1-4, **dadurch gekennzeichnet, dass** die zu übertragenden Informationen Preisinformationen, die durch das elektronische Preisschild (5a, 5b) angezeigt werden sollen, oder Steuerinformationen für das elektronische Preisschild (5a, 5b) aufweisen.

6. Elektronisches Preisschildsystem, das wenigstens zwei Basisstationen (7) und mehrere elektronische Preisschilder (5a, 5b) aufweist, wobei die Basisstationen (7) und die elektronischen Preisschilder (5a, 5b) wenigstens Kommunikationsmittel aufweisen und Informationen zwischen den Basisstationen (7) und den Preisschildern (5a, 5b) übertragen werden, **dadurch gekennzeichnet, dass**
die erste Basisstation (7) eingerichtet ist, um eine erste Meldung in einem ersten Frequenzband gleichzeitig damit zu senden, dass die zweite Basisstation auf einem zweiten Frequenzband sendet, und nach dem Senden der ersten Meldung eine zweite Meldung in einem zweiten Frequenzband gleichzeitig damit zu senden, dass die zweite Basisstation auf dem ersten Frequenzband sendet, und eine dritte Meldung auf dem zweiten Frequenzband zu empfangen, die durch das elektronische Preisschild durch Rückspiegelung der durch die erste Basisstation gesandten zweiten Meldung gesandt wird, und
die zweite Basisstation (7) eingerichtet ist, um eine erste Meldung auf einem ersten Frequenzband zu einem elektronischen Preisschild (5a, 5b) gleichzeitig damit zu senden, dass die erste Basisstation auf einem zweiten Frequenzband sendet, und nach dem Senden der ersten Meldung eine zweite Meldung in dem zweiten Frequenzband zu dem elektronischen Preisschild (5a, 5b) gleichzeitig damit zu senden, dass die erste Basisstation auf dem ersten Frequenzband sendet, und eine dritte Meldung auf dem zweiten Frequenzband von dem elektronischen Preisschild (5a, 5b) zu empfangen, die durch das elektronische Preisschild durch Rückspiegelung der durch die zweite Basisstation gesandten zweiten Meldung gesandt wird,
wobei das erste Frequenzband und das zweite Frequenzband unterschiedliche Frequenzbänder sind.

## Revendications

1. Procédé pour transférer des informations dans un système d'étiquettes de prix électroniques, le système d'étiquettes de prix électroniques comprenant au moins deux stations de base (7) et une pluralité d'étiquettes électroniques (5a, 5b), dans lequel les stations de base (7) et les étiquettes électroniques (5a, 5b) comprennent au moins des moyens de communication et des informations sont transférées entre les stations de base (7) et les étiquettes électroniques (5a, 5b), **caractérisé en ce que** le procédé comprend :
l'envoi d'un premier message d'une première station de base (7) à une étiquette électronique (5a, 5b) en utilisant une première bande de fréquence,
après l'envoi du premier message, l'envoi d'un deuxième message de ladite première station de base (7) à ladite étiquette électronique (5a, 5b) en utilisant une deuxième bande de fréquence et, simultanément, l'envoi d'un premier message d'une deuxième station de base (7) à une étiquette électronique (5a, 5b) en utilisant une première bande de fréquence, et
l'envoi d'un troisième message de ladite étiquette électronique (5a, 5b) à ladite première station de base (7) en utilisant une deuxième bande de fréquence en renvoyant le deuxième message reçu de ladite première station de base, et
après cela, l'envoi d'un deuxième message de ladite deuxième station de base (7) à ladite étiquette électronique (5a, 5b) en utilisant la deuxième bande de fréquence et l'envoi d'un troisième message de ladite étiquette électronique (5a, 5b) à ladite deuxième station de base (7) en utilisant une deuxième bande de fréquence en renvoyant le deuxième message reçu de ladite deuxième station de base,
dans lequel la première bande de fréquence et la deuxième bande de fréquence sont différentes bandes de fréquence.

2. Procédé selon la revendication 1, **caractérisé en ce que** le troisième message est un message d'acquittement du premier message.

3. Procédé selon l'une quelconque des revendications 1 et 2, **caractérisé en ce que** la première bande de fréquence est une bande de fréquence plus élevée que la deuxième bande de fréquence.

4. Procédé selon la revendication 3, **caractérisé en ce que** la première bande de fréquence est une bande ISM à 2,4 GHz et la deuxième bande de fréquence est une bande ISM à 868 MHz.

5. Procédé selon l'une quelconque des revendications 1 à 4, **caractérisé en ce que** les informations à transférer comprennent des informations de prix à afficher par l'étiquette de prix électronique (5a, 5b) ou des informations de commande pour l'étiquette de prix électronique (5a, 5b).

6. Système d'étiquettes de prix électroniques, comprenant au moins deux stations de base (7) et une pluralité d'étiquettes électroniques (5a, 5b), dans lequel les stations de base (7) et les étiquettes électroniques (5a, 5b) comprennent au moins des moyens de communication et des informations sont transférées entre les stations de base (7) et les étiquettes électroniques (5a, 5b), **caractérisé en ce que**
la première station de base (7) est configurée pour envoyer un premier message dans une première bande de fréquence simultanément avec l'envoi par la deuxième station de base dans une deuxième bande de fréquence et, après l'envoi du premier message pour envoyer un deuxième message dans une deuxième bande de fréquence simultanément avec l'envoi par la deuxième station de base dans la première bande de fréquence et pour recevoir un troisième message dans la deuxième bande de fréquence envoyé par l'étiquette électronique en renvoyant le deuxième message envoyé par la première station de base, et
la deuxième station de base (7) est configurée pour envoyer un premier message dans une première bande de fréquence à une étiquette électronique (5a, 5b) simultanément avec l'envoi par la première station de base dans une deuxième bande de fréquence et, après l'envoi du premier message, pour envoyer un deuxième message dans la deuxième bande de fréquence à ladite étiquette électronique (5a, 5b) simultanément avec l'envoi par la première station de base dans la première bande de fréquence, et pour recevoir un troisième message dans la deuxième bande de fréquence de ladite étiquette électronique (5a, 5b) envoyé par l'étiquette électronique en renvoyant le deuxième message envoyé par la deuxième station de base,
dans lequel la première bande de fréquence et la deuxième bande de fréquence sont différentes bandes de fréquence.
